# EUROPEAN PATENT SPECIFICATION

(11) **EP 2 597 193 B1**
(45) Date of publication and mention of the grant of the patent: **15.01.2014**
(21) Application number: 11190559.2
(22) Date of filing: 24.11.2011
(51) Int. Cl.: D06N 3/00, B32B 5/26, B32B 7/14, B32B 5/02

(54) **Method for manufacturing fabrics with artificial leather textile feeling**
Verfahren zur Herstellung von Stoff, der sich wie ein Kunstlederstoff anfühlt
Procédé de fabrication de tissus doté d'un aspect de textile de cuir artificiel

(43) Date of publication of application: 29.05.2013
(73) Proprietor: Jade Long John Enterprise Co., Ltd, Changhua County (TW)
(72) Inventor: Wen, Wen-Tsao, Shetou Township, Changhua County (TW)
(74) Representative: 2K Patentanwälte Blasberg Kewitz & Reichel

(56) References cited:
- EP-A2- 1 760 189
- KR-B1- 100 813 459
- US-A- 4 465 730
- US-A1- 2009 047 476

## Description

### FIELD OF THE INVENTION

The present invention relates to a method for manufacturing fabrics and particularly to a method for manufacturing fabrics with artificial leather textile feeling.

### BACKGROUND OF THE INVENTION

Leather is mainly applied to various types of commodities such as footwear, garments, furniture, sport facilities and the like. Depending on sources, the leather can be categorized into natural leather and synthetic leather. The former generally is gotten from the hide of animals that becomes leather after being processed. The latter generally is formed by laying polymer material with leather textile feeling on a nonwoven fabric. In view of increasing environmental protection awareness, usage of natural leather gradually decreases and synthetic leather is commonly used instead.

Many methods of manufacturing synthetic leather have been proposed in prior arts, such as U.S. publication Nos. 2003/0162453, 2004/0237221 and 2006/0234589, and U.S. patent Nos. 7,896,997, 4,465,730 and 5,484,646. They mostly disclose synthetic leather comprising polymer material, a bonding layer and a nonwoven fabric base. The polymer material usually is formed in a sheet or lump, and mostly adopts polyurethane (PU) or polyvinyl chloride (PVC). During production, the polymer material is directly laid on the nonwoven fabric base through the bonding layer. Moreover, U.S. patent No. 6,890,602 and U.S. publication Nos. 2011/0039055 and 2009/0047476 also disclose a method of manufacturing synthetic leather that soaking a nonwoven fabric into an aqueous solution with viscoelastic polymer that fills with the crevices of the nonwoven fabric and also fully covers the surface of the nonwoven fabric. The viscoelastic polymer usually adopts PU. As the polymer or viscoelastic polymer has characteristics of elasticity, smoothness and compactness, it provides artificial leather textile feeling.

The synthetic leather fabricated via the aforesaid conventional techniques mostly has the surface of the nonwoven fabric fully covered by the polymer at a selected thickness to generate a leather-like effect. Although the polymer material such as PU or PVC can provide leather-like textile feeling, appearance and compactness, its air permeability is poor. When it is applied to garments, furniture, sport facilities or the like, user's skin often feels muggy and uncomfortable.

### SUMMARY OF THE INVENTION

The primary object of the present invention is to solve the problem of the conventional synthetic leather that is formed by adopting the viscoelastic polymer for the surface thereof to result in undesirable air permeability.

To achieve the foregoing object, the present invention provides a method for manufacturing fabrics with artificial leather textile feeling. The method includes steps of: first, knitting a high shrinkage fiber and a first superfine fiber to form a plurality of warp knitted terries arranged in a warp knitted structure to get an upper fabric which has a surface and a back surface opposite to the surface; next, spraying mists containing a plurality of liquid particles formed by a setting resin onto the surface of the upper fabric so that the liquid particles adhere to the warp knitted terries on the surface of the upper fabric; then heating the upper fabric to a processing temperature lower than the melting point of the setting resin and rolling the upper fabric through a rolling equipment to set the setting resin to prevent the warp knitted terries from warping against the surface thereof and also form a preset pattern on the surface; and finally, after the upper fabric being cooled, bonding the back surface of the upper fabric to a bonding surface of a lower fabric via an adhesive to form an artificial leather fabric.

The method for manufacturing fabrics with artificial leather textile feeling of the invention set forth above provides many advantages over the conventional techniques, notably:
1. The first superfine fiber adopted in the invention is formed in a smaller diameter, hence the crevices between the fibers in the upper fabric during knitting can be minimized. Moreover, as the high shrinkage fiber has a characteristic of great shrinkage after being heated, the dimension of the crevices can be further shrunk so that users almost do not feel the loose structure presented by general fabric when touching, but feel a fine and compact structure like natural leather. In addition, by using the setting resin to prevent the warp knitted terries from warping, the surface of the artificial leather fabric is smoother and can present the textile feeling and appearance like natural leather.
2. The invention adopts a knitting method to incorporate with a small amount of mists formed by the setting resin to allow the liquid particles of the mists to adhere to the surfaces of the warp knitted terries, and uses a hot rolling process to prevent the warp knitted terries from warping, thus smoother textile feeing can be achieved. As the setting resin does not cover the surface of the upper fabric by stacking but adhere to the warp knitted terries via liquid particles, the fabric provided by the invention not only has artificial leather textile feeling, but also has improved air permeability without causing mugginess and discomfort to users.

The foregoing, as well as additional objects, features and advantages of the invention will be more readily apparent from the following detailed description, which proceeds with reference to the accompanying drawings.

### BRIEF DESCRIPTION OF THE DRAWINGS

FIGS. 1A through 1D are schematic views of manufacturing fabrics with artificial leather textile feeling according to one embodiment of the invention.
FIG. 2 is a schematic view showing the knitting structure of the upper fabric according to one embodiment of the invention.
FIG. 3 is a schematic view showing the knitting structure of the lower fabric according to one embodiment of the invention.
FIG. 4 is a schematic view of spraying mists via a screen according to one embodiment of the invention.

### DETAILED DESCRIPTION OF THE PREFERRED EMBODIMENTS

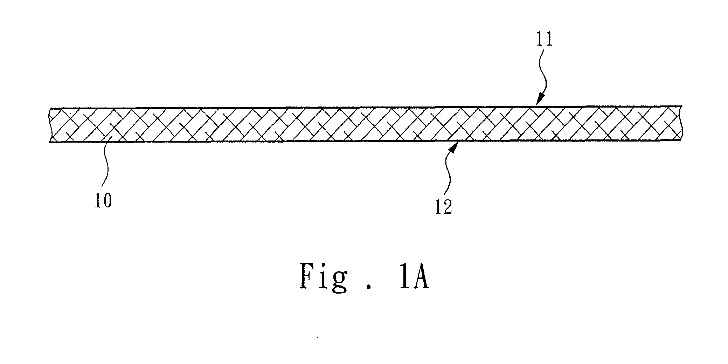

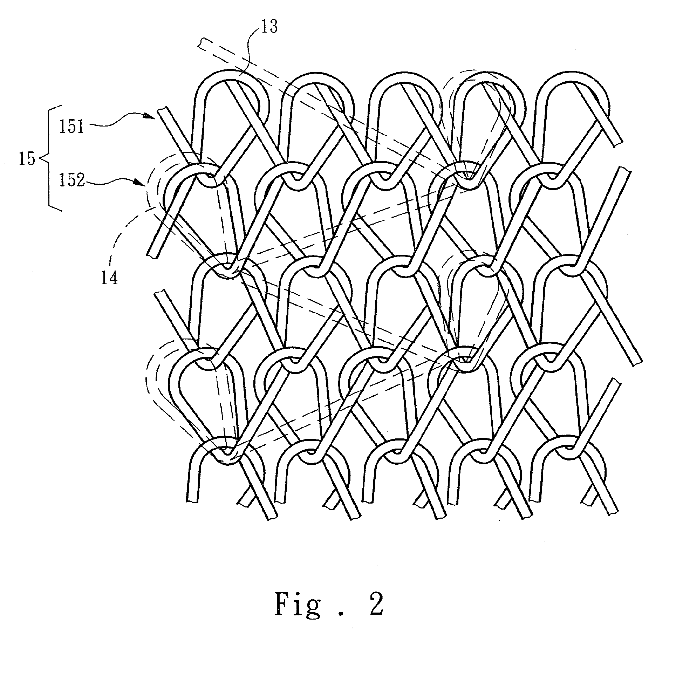

Please refer to FIGS. 1A through 2 for an embodiment of the method for manufacturing fabrics with artificial leather textile feeling according to the invention. The method includes steps as follows: first, providing an upper fabric 10 with a surface 11 and a back surface 12 opposite to the surface 11 as shown in FIG. 1A. Referring to FIG. 2, the upper fabric 10 is formed by knitting a high shrinkage fiber 13 and a first superfine fiber 14 to form a plurality of warp knitted terries 15 arranged in a warp knitted structure which includes a first warp knitted terry 151 formed by the high shrinkage fiber 13 and a second warp knitted terry 152 formed by the first superfine fiber 14. In this embodiment, the high shrinkage fiber 13 and first superfine fiber 14 can be Spandex, Nylon 6 or Nylon 6-6, or made of Polyethylene Terephthalate (PET), PU, Polyethylene (PE) or Polypropylene (PP). In the invention, the high shrinkage fiber 13 is formed at a linear density between 2dtex and 3dtex, and the first superfine fiber 14 is formed at a linear density between 0.2dtex and 0.6dtex. FIG. 2 illustrates only one knitting structure of the upper fabric 10 for illustrative purpose. In practice, the upper fabric 10 may also be knitted in other types of warp knitted structure.

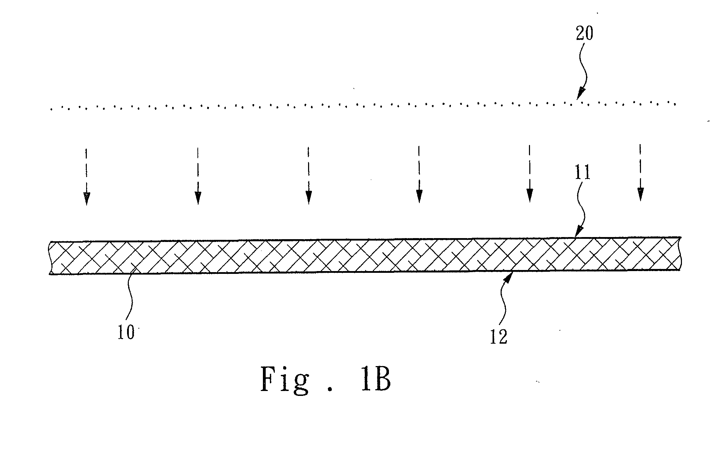

Referring to FIG. 1B, the surface 11 of the upper fabric 10 is sprayed by mists 20 which includes a plurality of liquid particles composed of a setting resin. The liquid particles permeate into the upper fabric 10 and adhere to the warp knitted terries 15 on the surface 11 of the upper fabric 10. In the invention, the setting resin generally means adhesive thermosetting resin, such as Epoxy, Polymethylmethacrylate (PMMA), Polyurethane (PU), PVC, PET or the like. The mists 20 are sprayed from a mist generation apparatus that holds a mixed solution prepared by the setting resin. In this embodiment, the mist generation apparatus may include a casing, a holding chamber in the casing and a plurality of nozzles running through the casing. The mixed solution is poured into the holding chamber, and then is forced to pass through the nozzles via pressure to spray out to form the liquid particles. The mists 20 generated by the mist generation apparatus previously discussed merely serves as an example. In practice, other methods or apparatus capable of generating the mists 20 containing liquid particles from the setting resin also can be used.

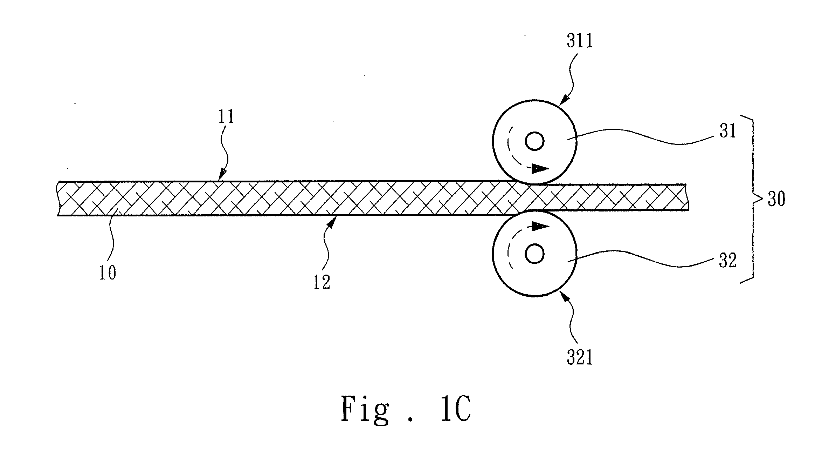

Referring to FIG. 1C, after the mists 20 are sprayed on the surface 11 of the upper fabric 10 with the liquid particles adhering to the warp knitted terries 15, the upper fabric 10 is heated to a processing temperature lower than the melting point of the setting resin and rolled via a rolling equipment 30. In practice, the processing temperature is selected according to actual material used by the setting resin. In an embodiment, with the setting resin of PU, the processing temperature is between 130□and 170□, preferably between 145□ and 155□. As shown in FIG. 1C, the rolling equipment 30 includes a first hot roller 31 and a second hot roller 32 opposing the first hot roller 31. The first and second hot rollers 31 and 32 have respectively a first circular wall 311 and a second circular wall 321. The first circular wall 311 has an embossing pattern formed on the surface thereof. Both the first and second hot rollers 31 and 32 are made of metal, hence can transmit heat to the surface 11 of the upper fabric 10. The step previously discussed aims to convey the upper fabric 10 into the rolling equipment 30. As the first and second hot rollers 31 and 32 are spaced from each other at a gap smaller than the thickness of the upper fabric 10, hence when the first hot roller 31 rolls the upper fabric 10 and heats the surface 11 of the upper fabric 10 to the processing temperature, the warp knitted terries 15 are prevented from warping against the surface 11 of the upper fabric 10 because the setting resin adhering to the warp knitted terries 15 is heated and rolled at the same time. Therefore, the thickness of the upper fabric 10 is reduced to become more compact.

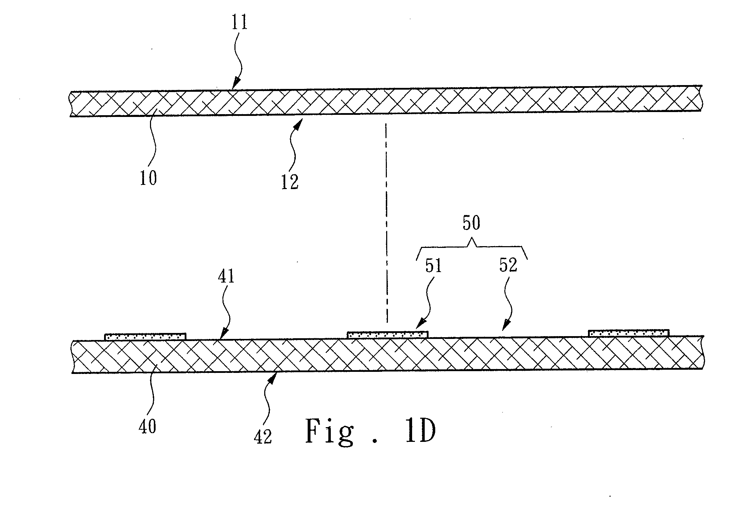

Referring to FIG. 1D, after the setting resin is cooled and set, the upper fabric 10 is bonded to a lower fabric 40 to form an artificial leather fabric at a thickness between 1mm and 3mm. In the invention, this step is executed by bonding the back surface 12 of the upper fabric 10 to a bonding surface 41 of the lower fabric 40 trough an adhesive. The adhesive can be moisture curing polymer adhesive with desired air permeability, preferably PU or PMMA which can maintain its extensibility after being set. The moisture curing polymer adhesive is coated on the back surface 12 of the upper fabric 10 to form a bonding layer 50 through roller printing, knife printing or spreading. As shown in FIG. 1D, the bonding layer 50 preferably covers part of the bonding surface 41 of the lower fabric 40, namely the bonding layer 50 includes a plurality of bonding zones 51 and a plurality of non-bonding zones 52, and the bonding zones 51 are connected to the bonding surface 41. Besides, the non-bonding zones 52 are complementary to the bonding zones 51. After the bonding layer 50 is formed, the back surface 12 of the upper fabric 10 is in contact with the bonding layer 50 to bond the upper fabric 10 to the lower fabric 40.

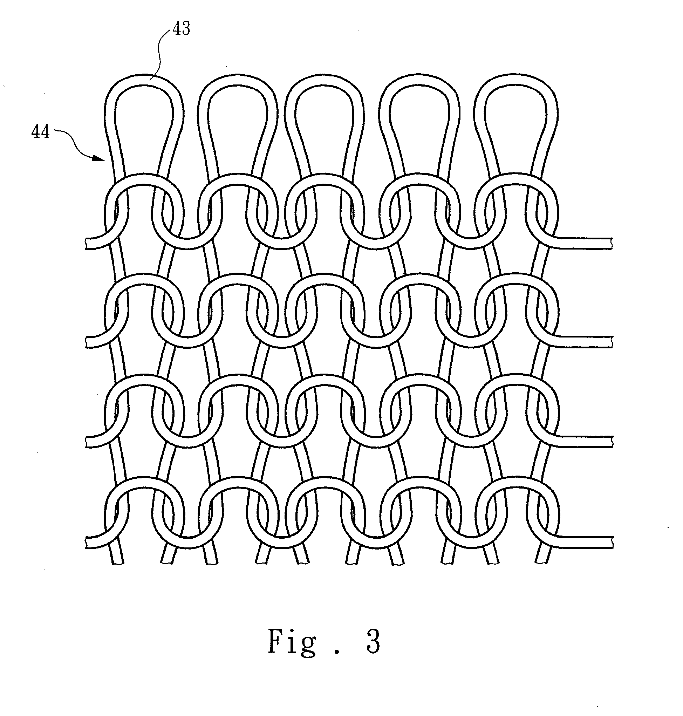

This embodiment coats the adhesive onto the bonding surface 41 of the lower fabric 40 to form the bonding layer 50 as an example. However, other approaches may also be adopted, such as coating the adhesive first on the back surface 12 of the upper fabric 10 to form the bonding layer 50, and then connecting the bonding surface 41 of the lower fabric 40 to the bonding layer 50. In addition, in this embodiment, the lower fabric 40 is formed by knitting a second superfine fiber 43 to form a plurality of weft knitted terries 44 arranged in a weft knitted structure. The second superfine fiber 43 may be Spandex, Nylon 6 or Nylon 6-6, or may be made of PET, PU, PE or PP. The second superfine fiber 43 is formed at a linear density between 0.6dtex and 1.2dtex. Refer to FIG. 3 for a knitting structure of the lower fabric 40 according to one embodiment of the invention. According to actual production requirements, the lower fabric 40 can also be knitted in other types of weft knitted structure.

Before bonding the upper fabric 10 to the lower fabric 40 via the adhesive, the lower fabric 40 may be treated through a raising process by using a raising brush to generate a plurality of pile yarns on the bonding surface 41 and a contacting surface 42 opposing the bonding surface 41 of the lower fabric 40. Furthermore, the pile yarns may further be cut off to form a plurality of piles on the bonding surface 41 and contacting surface 42 opposing the bonding surface 41 of the lower fabric 40. The raising treatment is a technique known in the art, hence details are omitted herein. Thus, more bonding areas can be formed between the bonding surface 41 and bonding layer 50. In addition, the bonding surface 41 may also mechanically bond to the warp knitted terries 15 on the back surface 12 of the upper fabric 10 through the pile yarns or piles so that the upper fabric 10 and the lower fabric 40 can be boned firmer. As the contacting surface 42 is treated through the raising process, when the invention is applied to the products such as footwear and garments, not only the textile feeling thereof is close to natural leather, but also provides more comfort for users' skin when contacting.

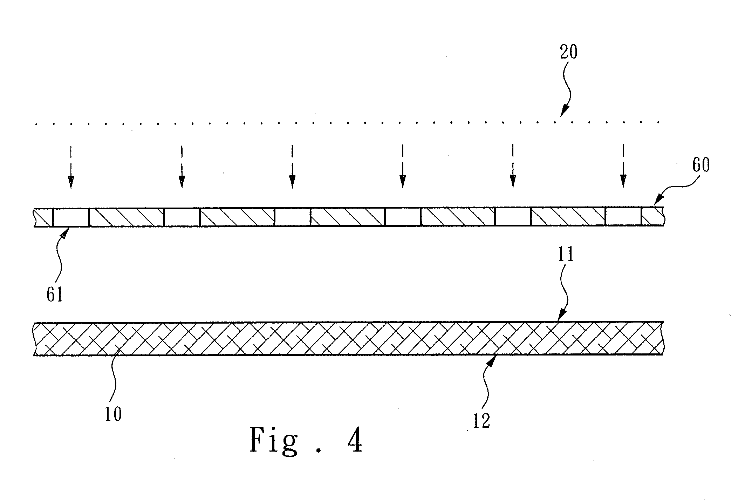

Aside from spraying the mists 20 onto the upper fabric 10 as shown in FIG. 1B to allow the liquid particles of the mists 20 to adhere to the warp knitted terries 15 on the surface 11 with a greater area, another approach may also be adopted as shown in FIG. 4 to use a screen 60 to cover the surface 11 of the upper fabric 10 during spraying of the mists 20. The screen 60 has a plurality of apertures 61 to allow the mists 20 to pass through and spray on a portion of the upper fabric 10, hence the area that the liquid particles of the mists 20 adhere to the warp knitted terries 15 on the surface 11 is smaller, and a softer artificial leather fabric can be obtained.

The method provided by the invention selects the first superfine fiber with a smaller diameter, hence can shrink the crevices between the fibers in the upper fabric. Besides, as the high shrinkage fiber has a characteristic of great shrinkage when being heated, the crevices can be further reduced after being hot rolled, thus can form a compact structure like natural leather. Moreover, the setting resin incorporating with the hot rolling is used to prevent the warp knitted terries from warping so that the surface of the upper fabric is smoother. In short, the artificial leather fabric manufactured according to the method of the invention provides textile feeling and appearance like natural leather. In addition, the artificial leather fabric of the invention is fabricated by knitting and using merely a small amount of setting resin to prevent warping of the warp knitted terries. As the setting resin does not cover the surface of the upper fabric in a flat manner but adhere to the warp knitted terries via the particles, the artificial leather fabric thus formed provides excellent air permeability without causing mugginess and discomfort to users. It provides a significant improvement over the conventional techniques.

While the preferred embodiments of the invention have been set forth for the purpose of disclosure and are not the limitations of the invention, modifications of the disclosed embodiments of the invention as well as other embodiments thereof may occur to those skilled in the art. Accordingly, the appended claims are intended to cover all embodiments which do not depart from the scope of the invention set forth in the claims.

## Claims

1. A method for manufacturing fabrics with artificial leather textile feeling, **characterized by** steps of:
knitting a high shrinkage fiber (13) and a first superfine fiber (14) to form a plurality of warp knitted terries (15) arranged in a warp knitted structure to obtain an upper fabric (10) which includes a surface (11) and a back surface (12) opposite to the surface (11);
spraying mists (20) including a plurality of liquid particles composed by a setting resin on the surface (11) of the upper fabric (10) such that the plurality of liquid particles adhere to the plurality of warp knitted terries (15) formed on the surface (11) of the upper fabric (10);
heating the upper fabric (10) to a processing temperature lower than a melting point of the setting resin and rolling the upper fabric (10) through a rolling equipment (30) to set the setting resin to prevent the warp knitted terries (15) from warping against the surface (11) of the upper fabric (10) and form a preset pattern on the surface (11) of the upper fabric (10); and
cooling the upper fabric (10) and bonding the back surface (12) of the upper fabric (10) to a bonding surface (41) of a lower fabric (40) via an adhesive to form an artificial leather fabric.

2. The method of claim 1, wherein the high shrinkage fiber (13) and the first superfine fiber (14) are respectively selected from the group consisting of Spandex, Nylon 6 and Nylon 6-6, or made of a material selected from the group consisting of Polyethylene Terephthalate (PET), Polyethylene (PE) and Polypropylene (PP).

3. The method of claim 1 or 2, wherein the high shrinkage fiber (13) is formed at a linear density between 2dtex and 3dtex.

4. The method of one or more of the claims 1 to 3, wherein the first superfine fiber (14) is formed at a linear density between 0.2dtex and 0.6dtex.

5. The method of one or more of the claims 1 to 4, wherein the setting resin is selected from the group consisting of Epoxy, Polyurethane (PU), Polyvinyl chloride (PVC), Polymethylmethacrylate (PMMA) and Polyethylene Terephthalate (PET).

6. The method of one or more of the claims 1 to 5, wherein the lower fabric (40) is formed by knitting a second superfine fiber (43) to form a plurality of weft knitted terries (44) arranged in a weft knitted structure.

7. The method of claim 6, wherein the second superfine fiber (43) is formed at a linear density between 0.6dtex and 1.2dtex.

8. The method of claim 6 or 7, wherein the lower fabric (40) is treated via a raising process to form a plurality of pile yarns on at least a portion of the bonding surface (41) of the lower fabric (40) before being bonded to the upper fabric (10).

9. The method of claim 8, wherein the plurality of pile yarns formed on the bonding surface (41) of the lower fabric (40) are cut off to form a plurality of piles on the bonding surface (41).

10. The method of one or more of the claims 1 to 9, wherein the adhesive is selectively made of Polyurethane (PU) or Polymethylmethacrylate (PMMA).

11. The method of one or more of the claims 1 to 10, wherein the adhesive is coated first onto the back surface (12) of the upper fabric (10) to form a bonding layer (50), and then the bonding surface (41) of the lower fabric (40) is adhered to the bonding layer (50) to bond the upper fabric (10) to the lower fabric (40).

12. The method of claim 11, wherein the bonding layer (50) includes a plurality of bonding zones (51) to connect the back surface (12) of the upper fabric (10) and the bonding surface (41) of the lower fabric (40), and a plurality of non-bonding zones (52) complementary to the plurality of bonding zones (51).

13. The method of one or more of the claims 1 to 12, wherein the adhesive is coated first onto the bonding surface (41) of the lower fabric (40) to form a bonding layer (50), and then the back surface (12) of the upper fabric (10) is adhered to the bonding layer (50) to bond the upper fabric (10) to the lower fabric (40).

14. The method of claim 13, wherein the bonding layer (50) includes a plurality of bonding zones (51) to connect the back surface (12) of the upper fabric (10) and the bonding surface (41) of the lower fabric (40), and a plurality of non-bonding zones (52) complementary to the plurality of bonding zones (51).

15. A fabric with artificial leather textile feeling being manufactured according to the method of claim 1.

## Patentansprüche

1. Verfahren zur Herstellung von Geweben mit einer textilen Kunstleder-Optik, **gekennzeichnet durch** die Schritte :
Stricken einer stark schrumpfbaren Faser (13) und einer ersten ultrafeinen Faser (14), um eine Vielzahl von gewirkten Frottiergeweben (15) angeordnet in einer gewirkten Struktur um ein oberes Gewebe (10) zu bilden mit einer Oberfläche (11) und einer hinteren Oberfläche (12) gegenüberliegen zu der Oberfläche (11);
ein Sprühen eines Sprühnebel (20) enthaltend eine Vielzahl von Teilchen einer Flüssigkeit zusammengesetzt aus einem schnell abbindenden Harz auf die Oberfläche (11) der oberen Gewebelage, so dass die Vielzahl von flüssigen Teilchen an der Vielzahl von gewirkten Frottiergeweben (15) haften, die auf der Oberfläche (11) des oberen Gewebes (10) ausgebildet sind;
Erwärmen des oberen Gewebes (10) auf eine Behandlungstemperatur niedriger als der Schmelzpunkt des schnell abbindenden Harzes und Laminieren des oberen Gewebes (10) durch eine Walzeinrichtung (30) um das schnell abbindende Harz zu setzen, um zu vermeiden, dass sich das gewirkte Frottiergewebe (15) gegen die Oberfläche (11) des oberen Gewebes (10) verformt und Ausbilden eines Musters auf der formgebenden Oberfläche (11) des oberen Gewebes (10), und
Kühlen des oberen Gewebes (10) und Verbinden der hinteren Oberfläche (12) des oberen Gewebes (10) mit einer Verbindungsfläche (41) eines unteren Gewebes (40) **durch** einen Klebstoff, um ein textiles Kunstleder zu bilden .

2. Verfahren nach Anspruch 1, bei dem die stark schrumpfbaren Fasern (13) und die erste ultrafeine Faser (14) jeweils ausgewählt sind aus der Gruppe, bestehend aus Spandex, Nylon 6 und Nylon 6-6, oder hergestellt sind aus einem aus Material ausgewählt aus der Gruppe bestehend aus Polyethylen Terephthalat (PET ), Polyethylen (PE) und Polypropylen (PP).

3. Verfahren nach Anspruch 1 oder 2, wobei die stark schrumpfbare Faser (13) in einer linearen Dichte zwischen 2dtex und 3dtex gebildet wird.

4. Verfahren nach einem oder mehreren der Ansprüche 1 bis 3, wobei die erste ultrafeine Faser (14) mit einer linearen Dichte zwischen 0.2dtex und 0.6dtex ausgebildet wird.

5. Verfahren nach einem oder mehreren der Ansprüche 1 bis 4, wobei das Harz ausgewählt wird aus der Gruppe bestehend aus Epoxid-, Polyurethan (PU), Polyvinylchlorid (PVC), Polymethylmethaerylate (PMMA) und Polyethylen Terephthalat (PET) .

6. Verfahren nach einem oder mehreren der Ansprüche 1 bis 5, wobei das untere Gewebe (40) geformt ist durch Weben/Stricken einer zweiten ultrafeinen Faser (43), um eine Vielzahl von Strickschlingenfaden zu bilden (44) angeordnet in einer schußgewirkten Struktur .

7. Verfahren nach Anspruch 6, wobei die zweite ultrafeine Faser (43) mit einer linearen Dichte zwischen 0.6dtex und 1.2dtex ausgebildet.

8. Verfahren nach Anspruch 6 oder 7, wobei das untere Gewebe (40) durch einen Hebeprozesse behandelt wird, zur Bildung einer Mehrzahl von Polfaden auf mindestens einem Teil der Verbindungsfläche behandelt wird (41) des unteren Gewebes (40), bevor sie an dem oberen Gewebe (10) befestigt wird.

9. Verfahren nach Anspruch 8, wobei die Vielzahl von Polfaden, die auf der Verbindungsfläche (41) des unteren Gewebes (40) ausgebildet sind, geschnitten werden, um eine Vielzahl von Stapeln auf der Verbindungsfläche (41) zu bilden.

10. Verfahren nach einem oder mehreren der Ansprüche 1 bis 9, wobei der Klebstoff selektiv aus Polyurethan (PU) oder Polymethylmethacrylat (PMMA) gemacht ist.

11. Verfahren nach einem oder mehreren der Ansprüche 1 bis 10 , wobei der Klebstoff zuerst auf der Rückseite (12) des oberen Gewebes (10) geschichtet ist, um eine Haftschicht (50) zu bilden, und dann die Verbindungsfläche (41) des unteren Gewebes (40) an der Haftschicht (50) geklebt ist, um das obere Gewebe (10) an dem unteren Gewebe (40) zu binden.

12. Verfahren nach Anspruch 11, wobei die Haftschicht (50) eine Mehrzahl von Verbindungsbereichen (51) beinhaltet zum Verbinden der hinteren Fläche (12) des oberen Gewebes (10) und der Verbindungsfläche (41) des unteren Gewebes (40) und eine Vielzahl von nicht-bindenden Bereichen (52) komplementär zu der Mehrzahl von Verbindungsbereichen (51).

13. Verfahren nach einem oder mehreren der Ansprüche 1 bis 12 , wobei der Klebstoff zuerst auf der Verbindungsfläche (41) des unteren Gewebes (40) aufgetragen wird, um eine Haftschicht (50) zu bilden, und dann die hintere Oberfläche (12) des oberen Gewebes (10) an der Haftschicht (50) gebunden an dem oberen Gewebe (10) gebunden wird, um das untere Gewebe (40) zu binden.

14. Verfahren nach Anspruch 13, wobei die Haftschicht (50) eine Mehrzahl von Verbindungsbereichen (51) beinhaltet zum Verbinden der hinteren Fläche (12) des oberen Gewebes (10) und der Verbindungsfläche (41) des unteren Gewebes (40) und eine Vielzahl von nicht-bindenden Bereichen (52) komplementär zu der Mehrzahl von Verbindungsbereichen (51).

15. Ein Gewebe mit einer Kunstleder- Textiloberfläche, das nach dem Verfahren von Anspruch 1 hergestellt wird.

## Revendications

1. Un Procédé de fabrication de tissus doté d'un aspect de textile de cuir artificiel, **caractérisé par** les étapes :
un tricotage d'une fibre hautement rétractable (13) et une première fibre super fine (14) pour former une pluralité de tissus à boucle tricotés en chaîne (15) disposés au sein d'une structure tricotée en chaîne pour l'obtention d'un tissu supérieur (10) comportant une surface (11) et une surface arrière (12) opposée à la surface (11) ;
une pulvérisation brouillard (20) comportant une pluralité de particules liquides composée d'une résine à prise rapide sur la surface (11) du tissu supérieur de telle manière que la pluralité de particules liquides adhère à la pluralité de tissus à boucles tricotés en chaîne (15) formés sur la surface (11) du tissu supérieur (10) ;
le chauffage du tissus supérieur (10) à une température de traitement inférieur au point de fusion de la résine à prise rapide et le laminage du tissu supérieur (10) par l'intermédiaire d'un équipement de laminage (30) de manière à disposer la résine de façon à empêcher que les tissus de boucle tricotés en chaîne (15) n'ourdissent contre la surface (11) du tissu supérieur (10) et former un motif de mise en forme sur la surface (11) du tissu supérieur (10), et
le refroidissement du tissu supérieur (10) et la liaison de la surface arrière (12) du tissu supérieur (10) à une surface de liaison (41) d'un tissu inférieur (40) via an adhésif pour former un textile de cuir artificiel.

2. Le procédé de la revendication 1, dans lequel la fibre hautement rétractable (13) et la première fibre superfine (14) sont respectivement sélectionnées parmi le groupe constitué de Spandex , Nylon 6 et de Nylon 6-6 , ou réalisées à partir d'un matériau choisi dans le groupe constitué par de polyéthylène téréphtalate (PET), le polyéthylène (PE) et le polypropylène (PP).

3. Le procédé selon la revendication 1 ou 2, dans lequel la fibre hautement rétractable (13) est formée avec une densité linéaire comprise entre 2dtex et 3dtex .

4. Le procédé selon l'une ou plusieurs des revendications 1 à 3, dans lequel la première fibre superfine (14) est formée avec une densité linéaire comprise entre 0.2dtex et 0.6dtex .

5. Le procédé selon l'une ou plusieurs des revendications 1 à 4, dans lequel la résine à prise rapide est choisiedans le groupe consistant en époxy, polyuréthane (PU), le polychlorure de vinyle (PVC), Polymethylmethaerylate de méthyle (PMMA) et polyéthylène téréphtalate (PET).

6. Le procédé selon l'une ou plusieurs des revendications 1 à 5, dans lequel le tissu inférieur (40) est formée par tricotage d'une deuxième fibre superfine (43) pour former une pluralité de tissus à boucle tricotés en trame (44) disposées en une structure tricotée en fil de trame .

7. Le procédé selon la revendication 6 , dans lequel la seconde fibre superfine (43) est formée avec une densité linéaire entre 0.6dtex et 1.2dtex .

8. Le procédé selon la revendication 6 ou 7, dans lequel le tissu inférieur (40) est traité par l'intermédiaire d' un processus de collecte pour former une pluralité de fils de velours sur au moins une partie de la surface de liaison (41) de la toile inférieure (40) avant d'être collée au tissu supérieur (10).

9. Le procédé selon la revendication 8, dans lequel la pluralité de fils de velours formée sur la surface de liaison (41) du tissu inférieur (40) sont coupées pour former une pluralité de poils sur la surface de liaison (41).

10. Le procédé selon l'une ou plusieurs des revendications 1 à 9, dans lequel l'adhésif est sélectivement réalisée en polyuréthane (PU) ou de polyméthacrylate de méthyle (PMMA).

11. Le procédé selon l'une ou plusieurs des revendications 1 à 10, dans lequel l'adhésif est revêtu d'abord sur la surface arrière (12) du tissu supérieur (10) pour former une couche de liaison (50), et ensuite la surface de liaison (41) du tissu inférieur (40) est collée à la couche de liaison (50) pour lier le tissu supérieur (10) au tissu inférieur (40) .

12. Le procédé selon la revendication 11, dans lequel la couche de liaison (50) comporte une pluralité de zones de liaison (51) pour connecter la surface arrière ( 12) du tissu supérieur (10) et la surface de liaison (41) du tissu inférieur (40), et une pluralité de zones de non- liaison (52) complémentaires à la pluralité de zones de liaison (51).

13. Le procédé selon l'une ou plusieurs des revendications 1 à 12, dans lequel l'adhésif est revêtu en premier, sur la surface de liaison (41) du tissu inférieur (40) pour former une couche de liaison (50), puis la surface arrière (12) du tissu supérieur (10) est collée pour la couche de liaison (50) pour lier le tissu supérieur (10) pour le tissu inférieur (40).

14. Le procédé selon la revendication 13, dans lequel la couche de liaison (50) comporte une pluralité de zones de liaison (51) pour relier la surface arrière (12) du tissu supérieur (10) et la surface de liaison (41) du tissu inférieur (40), et une pluralité de zones de non- liaison (52) complémentaires à la pluralité de zones de liaison (51).

15. Un tissu présentant un aspect de cuir artificiel fabriqué selon le procédé de la revendication 1 .
